# EUROPEAN PATENT SPECIFICATION

(11) **EP 1 112 680 B1**
(45) Date of publication and mention of the grant of the patent: **09.03.2005**
(21) Application number: 00128217.7
(22) Date of filing: 22.12.2000
(51) Int. Cl.: A01K 1/01, A01C 3/02, A01G 31/00

(54) **Method and apparatus for integrated farming**
Verfahren und Vorrichtung zur integrierten Landwirtschaft
Procédé et dispositif pour l'élevage intégré

(30) Priority: 27.12.1999 MY 9905737
(43) Date of publication of application: 04.07.2001
(73) Proprietor: Technology Park Malaysia, Corporation SDN BHD (Co.No. 377141-T), Bukit Jalil, 57000 Kuala Lumpur (MY)
(72) Inventor: Datuk, Mohamad Salleh Bin Ismail, Dr., Bukit Damansara, 50490 Kuala Lumpur (MY); Mohd, Azman Bin Shahidin, Taman Melawati, 53100 Kuala Lumpur (MY)
(74) Representative: Joppich, Martin, Dr.-Ing.

(56) References cited:
- DE-A- 3 817 289
- US-A- 4 872 985
- US-A- 5 121 708
- SETBOONSARNG,S.; EDWARDS, P.: "An assessment of alternative strategies for the integration of pond aquaculture into the small-scale farming system of the North-east Thailand" AQUACULTURE ECONOMICS AND MANAGEMENT, vol. 2, no. 3, December 1998 (1998-12), pages 151-162, XP002171368

## Description

The invention refers to a method and an apparatus for integrated farming. In particular, the invention proposes a method and an apparatus for integrated farming.

Integrated farming is a sustainable-agriculture technology practiced widely in Asia and other regions of the world. This integrated technology can offer farmers economic improvements while lessening the adverse environmental impacts of farming. Typically, this system involves a combination of fish polyculture, integration of agricultural production (livestock and/or crops) with aquaculture, and on-farm waste recycling.

The transition from small-scale, low-tech to large-scale, high-tech farming methods is indeed challenging. Other than the psychological barriers, the investment cost barrier is the most obvious. As such, detailed research must be carried out on a commercial scale to first determine if such a venture will generate good returns on investment. This is crucial in order for private sector involvement to start and maintain these food production centres on an industrialised scale. In the long run, this will enable the agricultural sector to meet self-sufficiency levels for domestic food consumption.

It has been suggested from several research work that intense farming of fresh water fish can be carried out with the use of polyculture techniques. In polyculture techniques, e.g., three different kinds of fish are cultivated using the concept of multi-layer feeding. Thus, every layer of a fish pond will be a habitat for different types of fish. However, this kind of large-scale fish farming poses different problems so far which makes the whole process unstable on the long term.

It is an object of the invention to provide a method and an apparatus for integrated farming to solve the problems of high-cost imports for food and feed in particular for third world countries.

This object is solved by a method according to claim 1 and an apparatus according to claim 8. The inventive solution is based on the intense farming of layer hens in combination with conveying the droppings of the layer hens in a nearby water pond and providing a certain treatment of the water of the pond. This kind of rearing of layer hens is environmentally friendly with no bad smell and no flies wherein the droppings of the layer hens provides a nutrient-rich water which can be used for further integrated farming.

More specifically, the inventive solution comprises the steps of housing layer hens nearby a pond filled with water, conveying the droppings of the layer hens in the water of the pond and providing treatment of the water of the pond such that the amount of oxygen and/or the amount of ammonia and/or the pH-value and/or the temperature is stabilized approximately on a predetermined value.

According to one aspect of the invention the layer hens are housed on top of the pond. Thereby, land usage is reduced and many other problems associated with rearing of layers in land-based houses are solved.

In this context hens may be replaced with other poultry and/or livestock. This depends on the particular person attending to any special need. Therefore, any reference in this document to hens may also refer to other species of poultry and might also include livestock.

According to another aspect of the invention the water of the pond is used for fish rearing. Thereby, the undigested portion of the hen droppings can be used to save on fish feeding costs.

According to another aspect of invention, the water treatment comprises the following steps: pumping the water of the pond to another pond called the "cleaning pond". The cleaning pond will be used to clean the water of the pond of any ammonia and other impurities, and the cleaned water will be recycled to the pond.

According to another aspect of the present invention, the water treatment comprises the following steps: pumping the water of the pond to a sprinkler system for watering plants, collecting the water soaked through the soil of the plants and recycling the collected water back to the pond. The pump capacity can be controlled such that the sprinkler system provides a constant soil solve nutrients for the growth of the plants. In particular, the plants can consist of grass and/or vegetables and/or herbs. Considering the different growth parameters of vegetables, herbs and grass, a two-stage water treatment can be provided, wherein the water of the pond is first asked through a cultivated area of vegetables and/or herbs and then is passed through a cultivated area of grass. Thereby, the nutrients in the water, which are still not fully utilized by the vegetables and/or herbs can be used for the growth of the grass. Wherein the vegetables and/or herbs can be used for food production, the cultivated area of grass can be used for livestock rearing, which generates an additional revenue. Furthermore, the water from the cleaning pond as mentioned above might also be pumped into the sprinkler system.

According to another aspect of the present invention the water treatment comprises means for monitoring and control the amount of oxygen and/or the amount of ammonia and/or the pH-value and/or the temperature of the water of the pond. Thereby, an automated measurement and control of the parameters for water treatment can be carried out. This is important, because the inputs into and the outputs from the water can change rapidly due to their complex relationships. As such, sensors are used to continuously monitor the water and if possible, automatic feedback measures are built into the system. The use of computers to control and monitor the whole system then becomes necessary. Thereby, it is even possible to control and monitor financial variables involved and determining the profitability of the integrated farming.

In summary, the integrated farming concept according to the invention comprises the following aspects:
- Layer hens will be housed on top of the pond to reduce the land usage and to make use of the undigested portion of hen droppings to save on fish feeding costs. This will also solve many of the current problems associated with the rearing of layers in land-based houses. The said method will be environmentally friendly with no bad smell and no flies.
- Eggs produced by the hens can generate revenue as well. Also, eggs will be processed into downstream products that are higher value-added to increase income potential from the eggs.
- The nutrient-rich water from the fishpond will be used to grow high value vegetables and herbs. Multi-tiered hydroponics will also be used to optimise land usage. Nutrients in the water still not fully utilised by the plants and herbs will be directed to a sprinkler systems.
- The rearing of large quantities of fresh water fish in the ponds is automated by using sensors to monitor the amount of oxygen and ammonia in the water as well as the pH and temperature. The fish can be used as both fish protein and as fishmeal for the production of animal feed.
- This animal feed will be used to feed the layers, broilers, fish and other livestock such as cattle, goats, etc. in the feedlot system.
- The water from the fishponds is pumped to the sprinkler system to provide a constant source of nutrients for the growth of grass, plants and herbs. This will also reduce the high levels of ammonia in the water. The grass will be used to feed livestock like cattle, goat, deer, etc. The water, which is rid of its harmful components that have been used by the grass and plants, is directed back to the fishponds. The grass and plants act as a biological filter to clean the water from the fishponds and the clean water is recycled back for the rearing of fish.
- The cycle of feed, fish, eggs, vegetables/herbs and other livestock operations is monitored and controlled by a computer system.
- A computerized financial model is provided to investigate economic viability of the entire integration project.

The automated procedure of this integrated farming reduces the effort for manual labour, thus also reducing the risk of contamination of the products. Also, the productivity can be increased allowing lower unit costs over long term. This will help to ensure adequate supply and accessibility of safe, nutritious and high quality food at low prices. Altogether, the advantages of an automated method and apparatus according to the invention are as follows:
- **Competitive Advantage**
- Reduction of operational cost by reducing manpower while maintaining smooth operations. This in turn will enable lower per unit costs.
- Since the products are not handled manually at any stage, this allows reduction/elimination of diseases with manual handling, as discussed above. Hence, the products satisfy the stringent requirements for exports to sophisticated markets.
- Product types can be quickly changed from direct to processed and vice versa. This enables products to be selected according to their current market prices that are favourable.
- **Saves on foreign exchange outflow**

The invention will allow mass production of farm products locally. Also, the egg, vegetable and meat processing industry can be improved in the country. This will help reduce imports of such products. Excess products can be exported. Both these actions will help reduce the outflow of foreign exchange from the country.
- **Reduces system downtime**

The invention controls and monitors all operations centrally and warns of problems related to abnormal conditions using the automatic messaging system. In this way it helps avoid costly system downtime.
- **Free employees for more productive tasks**

The invention through its highly automated system reduces the need for physical handling of products, feeding the layers, fish and cattle or of taking measurements and site readings. This allows fewer employees with better skills to be employed to manage the operations. Also, the automatic messaging system gives the employees flexibility in movement, alerting when any emergencies occur.
- **Replenish inventories quickly and easily**

Monitoring through a management software permits timely replenishment of inventory.
- **Customised delivery plans.**

The invention allows deliveries to be made to the convenience of the operating hours and usage patterns of customers.

The invention uses modern dedicated equipment, accurate certified meters, and continuous network communication to make precise deliveries.
- **Conductive environment that reduces injury risk.**

The invention reduces the need to expose employees to adverse conditions on the farm, for e.g. unhygienic work conditions, slippery ladders/walkways or other potential hazards.

Other objects and features of the invention will become apparent by reference to the following specification and to the drawings in which:
- Fig. 1a: shows the basic structure of an integrated farming system according to a first embodiment of the invention;
- Fig. 1b: shows the basic structure of an integrated farming system according to a second embodiment of the invention;
- Fig. 2: shows a block diagram with the underlying process flows of the integrated farming system according to the invention;
- Fig. 3: shows the basic structure of a computer-based communication system for controlling the integrated farming system according to the invention and
- Fig. 4: shows the computer components for a computer integrated farming system according to the invention.

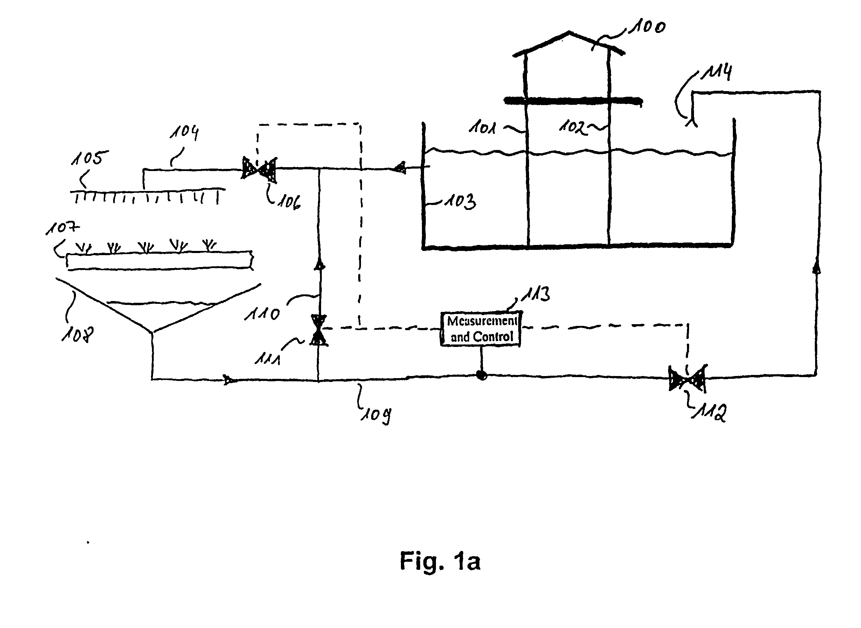

Fig. 1a shows the basic structure of an integrated farming system according to a first embodiment of the invention. A housing 100 for layer hens is placed on supporting pillars 101, 102 on top of a pond 103 filled with water. The water of the pond 103 is used for fish rearing. The fish make use of the undigested portion of the hens' droppings. To reduce the high level of ammonia and in order to refresh the water in the pond 103, a water treatment system 104-114 is provided. The water is pumped through a water outlet 104 from the pond 103 to a sprinkler system 105 via a control valve 106. The water pumped through the sprinkler system is distributed over a cultivated area of plants 107. Thereby, a constant source of nutrients for the growth of the plants is provided. After having soaked through the soil of the plants 107, the water is rid of its harmful components which have been taken up by the plants and is collected by a funnel 108. The water collected in the funnel 108 is redirected through the pipe 109 via the control valve 112. Furthermore, a branch pipe 110 with a control valve 111 is provided for enabling a multiple circulation of the water through the cultivated area of plants 107. All control valves 106, 111 and 112 are controlled by a measurement and control unit 113, which monitors the water quality for optimum fish growth and low mortality rates in accordance with pH, temperature, oxygen/nitrates/phosphates/ammonia content. After having achieved a satisfactory water quality, water is fed back to the pond via the inlet 114. Additionally, it is of course possible to supply fresh water to the inlet 114, if necessary.

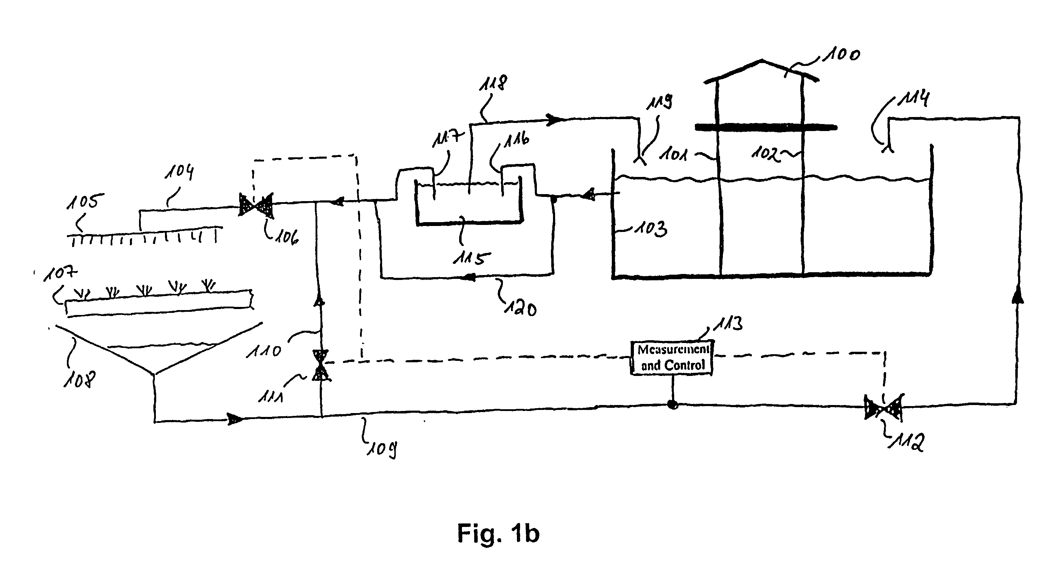

The integrated farming system according to Fig. 1 enables the housing of e.g. 250.000 layer hens and the rearing of about 10 to 20 million fish. The layer hens will produce about 1.000.000 eggs per day.

Fig. 1b shows the basic structure of an integrated farming system according to a second embodiment of the invention. The second embodiment according to Fig. 1b differs from the first embodiment according to Fig. 1a in that an additional cleaning pond 115 is provided. The water from the pond 103 is pumped through a water outlet 116 from the pond 103 through a water outlet 116 to the cleaning pond 115. The water will be cleaned in the cleaning pond 115 of ammonia and other impurities and will either be recycled through outlet 118 and supply 119 or pumped from cleaning pond 115 to outlets 117, 104 via the control valve 106 to the sprinkler system 105. Alternatively, the water from pond 103 will be pumped through the branch pipe 120 to outlet 104 while passing the cleaning pond 115 and will be piped via the control valve 106 to the sprinkler system 105.

For the first embodiment according to Fig. 1a and the second embodiment according to Fig. 1b, the water treatment process will now be described in further detail:

The parameters of amount oxygen, ammonia, pH-value and temperature are measured using appropriate multi-probes and/or sensors. The multi-probes and/or sensors are placed in the water of the pond 103, in the water of the cleaning pond 115 and at the funnel 108 before the recycled water is channelled back to the pond 103. The multi-probes and/or sensors are placed in such a way that the water is monitored properly in the pond 103, in the cleaning pond 115 and the funnel 108. In case the cleaning pond 115 is passed by using the pipe 120 and the water of the pond 103 is pumped directly into the sprinkler system 105, the multi-probes and/or sensors will be available at the sprinkler system 105 and at a funnel 108 before the water is recycled back to the pond 103. The multi-probes and/or sensors will measure the reading of oxygen, ammonia, pH-value, and then send the reading to the measurement and control unit 113. The measurement and control unit 113 may also be a central control room, where the computers which have been set with the required high and low readings will read and monitor the data transmitted by the multi-probe. If the oxygen level is too low, a pump will be automatically switched on and a required amount of oxygen will be pumped into the system. If the ammonia, pH-value are not in their predetermined range, water from the pond will be automatically pumped out to the cleaning pond 115 or directly into the sprinkler system 105 while using the branch pipe 120. If the reading of the multi-probes and/or sensors in the sprinkler system 105 are not within a predetermined range, fresh water from a spare pond will be pumped into the sprinkler system as much as necessary.

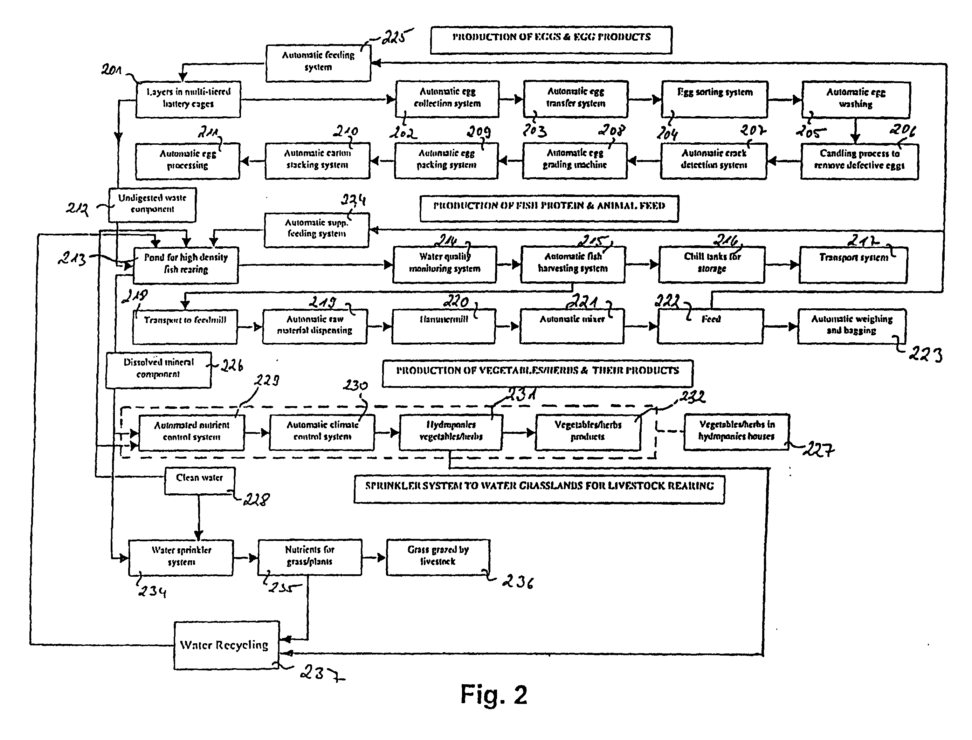

Fig. 2 shows a block diagram with the underlying process flows of the integrated farming system according to the invention. The complete process flow according to Fig. 2 can be divided into:
- process flow for the production of eggs and egg products,
- process flow for the production of fish protein and animal feed,
- process flow for the production of vegetables/herbs and vegetables/herb products, and
- process flow for the sprinkler system to water grasslands for livestock rearing.

### Production of eggs and egg products

The components for the production of eggs and egg products are already well developed and well-known. Layer hens are kept in multi-tiered battery cages 201. The eggs are collected by an automatic egg collecting system 202 by means of a conveyor system from each tier of the cages. The eggs are then collected by an automatic egg transfer system 203. The automatic egg transfer system 203 comprises a lift system that will put eggs from all the tiers onto a looped bar conveyor. An optical sensor counts the eggs before combining them with the eggs from the other rows of the cages. All the eggs are then transported by a conveyor to a count point before they are checked for quality and are graded in the following steps of egg sorting 204, automatic egg washing 205, removing defective eggs 206, 207 and egg grading 207.

In particular, the eggs collected from the layer houses now flow into a factory where they will be checked for defects such as cracks, deformed shells, etc. or dirt and blood on the eggs before they are graded. The eggs with dirt or blood can be cleaned if they are considered fit for grading. Otherwise, all eggs with defects are diverted for processing.

An optional process for automatic washing, drying and oiling of the eggs can be considered. This process is required especially if the eggs are to be exported to USA.

The eggs are then divided into 12 rows on the conveyor to pass through a candling process. Here, one operator checks eggs, illuminated by lights from below, for dirt, blood and defects that can be seen by the naked eye. The operator touches the eggs with defects with an electronic wand that will identify the said eggs for diversion into the egg processing line.

For small cracks that are not visible, an electromagnetic device is used to check the eggs. All the eggs identified as cracked will be diverted for processing as well.

The eggs that have been identified for grading will now be separated according to their weights. This operation is done automatically using a grading machine. The speed of grading depends on the amount of eggs to be graded. Typically, a maximum of 40 eggs can be graded per second using currently available machines.

Which follows now is the automatic egg packing 209 and the automatic cartoon stacking 210. Eggs that have been graded can now be packed automatically. The packing machine is integrated with the grading machine. Packing of the eggs can be configured as required, i.e. in 6's, 10's or 30's. Even the type of packaging can be selected as required and programmed into the computer. The packed eggs are then sent for automatic stacking before they are stored in the cold-room.

Eventually, a processing of eggs into various products can be carried out 211. Eggs that cannot be graded due to the various reasons discussed before are sent by conveyor into that processing plant. Good eggs are sometimes broken if the value of processing is higher than the value of the shell eggs. This is due to the fluctuations in the prices of shell eggs compared to processed eggs, which are more stable. Here, automated machines are used according to type of processing needed.

One example is the breaking and pasteurisation plant, which breaks the eggs and transfers the liquid eggs by stainless steel pipes to be pasteurised. The end product is then sold in packages for commercial and food-service use. The end product will need refrigeration to increase its shelf life.

Other forms of automatic egg processing include separating the egg yolks from the whites, which are then processed separately as:
- frozen eggs, yolks or whites,
- dried eggs, yolks or whites, and/or
- other specialty product, e.g. high-energy drinks.

### Production of fish protein and animal feed

The fish are kept in a pond below the battery cages of the layer hens 213. It is important that the water quality of the pond is always monitored to ensure also a good quality of fish 214. Once the fish are ready for harvesting, they will be guided by a water conveyor and selected according to size/weight to the harvesting point 215. Once there, the fish will be automatically harvested by an automated scooping mechanism. After that, two possibilities for further processing are provided: One possibility is to further transport the fish by chill tanks for storage 216 and a transport system 217. The other possibility is to further process the fish to fish meal and feed via the steps transport to a feed mill 218, automatic raw material dispensing 219, passing the fish through a hammer mill 220 and an automatic mixer 221. The fish meal is then conveyed to an automatic weighing and bagging station 223.

### Production of vegetables/herbs and their products

Vegetables/herbs are reared in hydroponics houses 227. These hydroponic houses comprise an automatic nutrient control system and an automatic climate control system 230. The water fed through the automatic nutrient control system and the automatic climate control system is sprinkled over the hydroponics vegetables/herbs 231. At the end vegetables/herbs 232 can be harvested in the hydroponic houses.

### Sprinkler system to water grassland for livestock rearing

The water used for all processes as described above can be recycled in a sprinkler system for water grassland. The water sprinkler system 234 distributes water over grass/plants 235, wherein livestock can be kept on the grass 236. The water soaked through the soil of the plants and the grass is then collected and recycled in a water recycling stage 237.

### Combined action of the processes above

The processes
- production of eggs and egg products,
- production of fish protein and animal feed,
- production of vegetables/herbs and the products, and
- sprinkler system to water grassland for livestock rearing
are now described in their combined action. The feed output 222 of the production of fish protein and animal feed can be used both for an automatic supplier feeding system 224 for the fish and an automatic feeding system 225 for the layer hens. In the following, the automatic feedings system 225 for the layer hens is described, wherein it is understood that the automatic feeding system 224 for the fish works in an analogue manner.

The feed is stored in a silo with a feed capacity of 3 to 5 days. These silos are normally located outside the layer houses. They are placed on load cells that will allow the quantity of remaining feed to be measured and thus to be refilled accordingly.

The feed is transported via a flexible screw conveyor into hoppers located in front of the layer battery cages. The feed quantity to be released into the troughs can be set as required. The feed hoppers are carried alongside the battery cages releasing the required amount of feed evenly into the troughs.

The total amount of feed per day for each layer house is measured and this data is sent to the central computer for further processing.

The drinking water for the layers is supplied, through nipples, directly from available water sources. The system is equipped with a drop-saving device to reduce wastage of water.

Monitoring the amount of water per day for each house can also be carried out and the data is sent to the central computer as well.

An output of the production of eggs and egg products is the waste component of the layer hens 212. This component is conveyed to the water in the pond 213 and has several effects. The undigested waste component can be used for further fish feeding, whereas the remaining component can be used as a source of nutrients and ammonias for the production of vegetables/herbs and grass. Consequently, the dissolved mineral components 226 in the water of the pond 213 is fed to the water sprinkler system 234 and to the automatic nutrient control system 229. On the hand, the output of the water recycling stage 237 is fed back to the pond 213 as a fresh water supply. Additionally, clean water 228 can be fed to the pond 213, to the automated nutrient control system 229 and to the water sprinkler system 234.

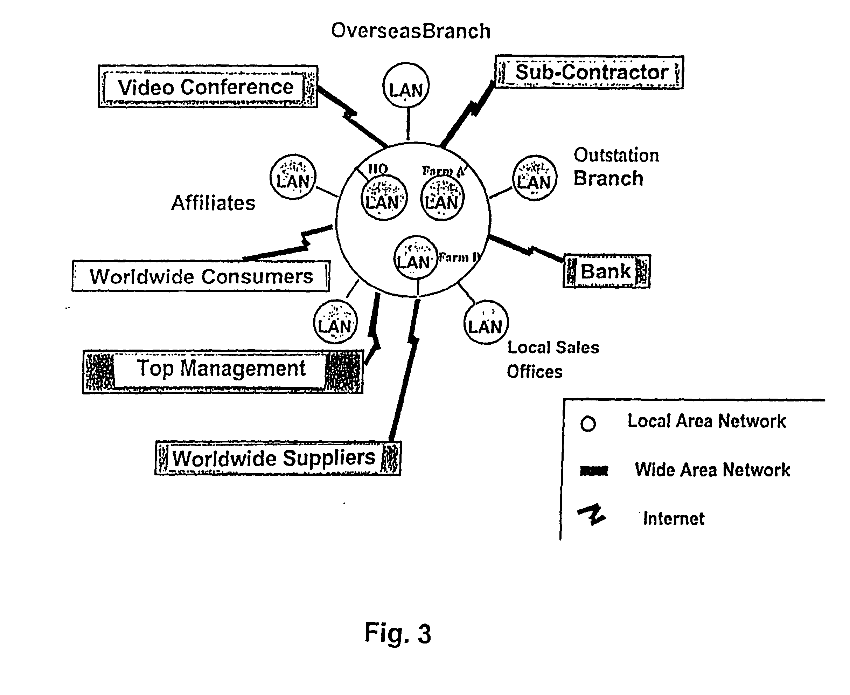

Fig. 3 shows the basic structure of the computer based communication system for controlling the integrated farming system according to the invention (in the following: CIF = computer integrated farming).

The CIF system has the following characteristics:

### Flexible

It is possible to integrate the CIF with a wide range of equipment and also to interface with third party software.

### Modular

Each module is capable of performing its task independently while being linked at the same time.

### Expandable

The hardware and software components can be added over a period of time, expanding capacity and capability of the CIF system.

### Cost effective

CIF is controlled by PC's using windows-based software together with automated equipment in a cost-effective layout.

The overall system components are as follows:
- Central control room
- Networking
- Security/monitoring video system
- Automated chicken/fish feeding system
- Automated chicken drinking water system
- Automated climate control system
- Automated egg collection and handling system
- Automated egg grading and processing factory
- Automated fish harvesting system
- Automated fish processing factory
- Automated feed mill
- Automated hydroponics farm
- Automated cattle feed-lot system
- Automated water sprinkler system

The control hierarchy of the computerized system will be divided into 3 areas as follows:
1. Management - information for decision-making
2. Control & monitoring - scheduling, inventory, etc.
3. Operational - production, maintenance, etc.

### Management

This is at the top of the control hierarchy of the computer integrated farming system. All the computers controlling the various modules listed above will be linked via a Local Area Network (LAN) and a Wide Area Network (WAN) if the system involves a number of farms. The information can also be viewed over the Internet. Critical and confidential information can be viewed over a secure network.

The networking of the CIF systems is shown on page 20.

The following factors are important to be monitored by the management and will be used for decision-making:
- Fish pond water quality
- Layer/fish/cattle feed consumption
- Quantity of eggs/fish/feed/vegetables/herbs/meat
- Inventory levels of eggs/fish/feed/vegetables/herbs/meat
- Visual inspection via closed circuit cameras
- Product quality information

### Control & Monitoring

The middle level of the control hierarchy will be used areas like scheduling, inventory levels, etc. This is to enable planning of the various operations to be carried out proactively. The factors that will be controlled and monitored at this level are as follows:
- Scheduling of egg grading and processing operations
- Fish feeding schedules
- Monitoring of equipment status
- Computerized telephony feedback system
- Monitoring of quality-in-line and by batches
- Iventory levels monitoring

### Operational

The third level of the control hierarchy is the operational level. At this level, day-to-day operations, especially production and maintenance, are carried out with the help of computers.

Some factors that will be monitored at this level are as follows:
- Topping up of feed silos
- Preventive maintenance
- Breakdown maintenance
- Solving quality problems
- Regular inventory tracking

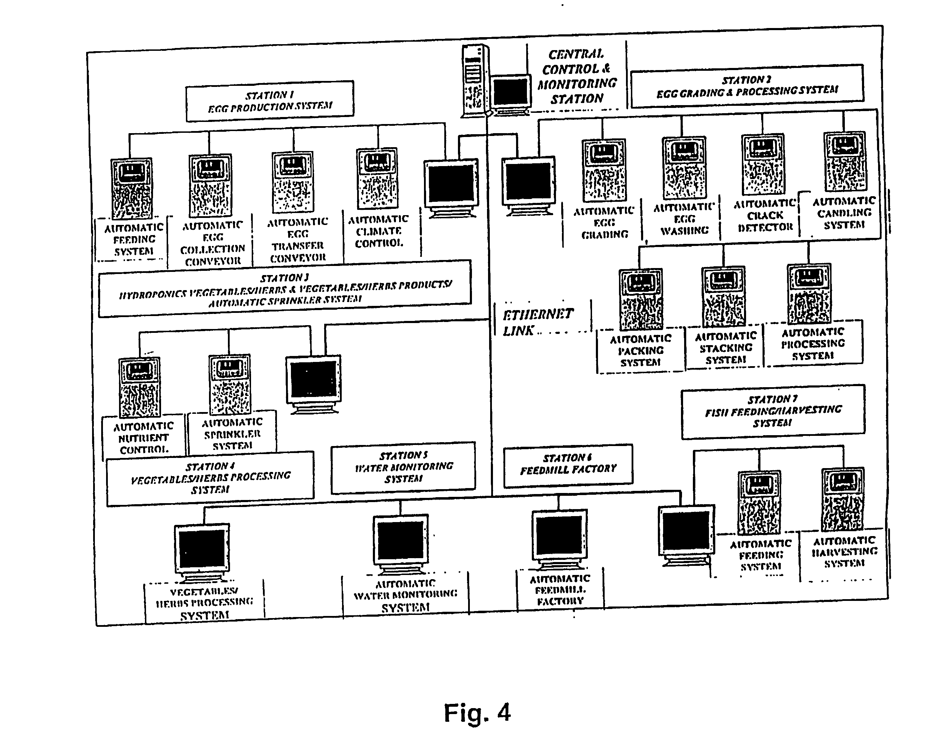

Fig. 4 shows the computer components for a computer integrated farming system.

In order to control the variables of the integrated farming system effectively, a computer system is used.

Some of the variables are as follows:
1. Water quality monitoring for optimum fish growth, low mortality rates and elimination of diseases (pH, temperature, oxygen/nitrates/phosphates/ammonia content)
2. Fish growth parameters (body weight at various forms, i.e. skin out, bone to meat ratio, mineral, energy and protein content, toxin levels, disease)
3. Livestock (cattle, goat, deer, etc.) growth parameters (bone to meat ratio, mineral, energy and protein content, toxin levels, disease)
4. Feed quality (crude protein/fat/fibre, ash, moisture)
5. Egg grade quality and productivity of layers (feed content/amount/quality, temperature, humidity, disease)
6. Plant and vegetable quality (nutrient composition/content/concentration)
7. Financial parameters
   - Expense analysis - cost of raw materials, feed, water, electricity, maintenance, improvements, modifications, day-old chicks, pullets, layers, fish fries, fish)
   - Revenue analysis - shell eggs- processed eggs, fresh vegetables, processed vegetables, animal feed, sale of similar systems, consultancy services, training)
   - Financial indicators/measurement - balance sheet, profit and loss, cash flow, return on investment and other financial ratios.

The entire system involves facilities to produce and process 1 million eggs per day, rearing of about 10 million fish in 5 ponds, feed production, planting of vegetables and herbs hydroponically, production of meat from cattle, goat, deer, etc. and any variation of the said quantity of fish, feed, layers and livestock.

The entire CIF processes are integrated using a total management system (TMS) software. TMS is a comprehensive set of software tools, specifically designed to support management decision-making and operations.

From live operations through inventory management and delivery to the customer, TMS records and manages the data on a real-time and daily basis. TMS allows management to maximize the use of critical data in order to assist in production, leading to satisfied customers. The software allows integration to the various equipment such as graders, feed mill equipment, harvesters, climate controllers, bar-code readers and printers, to assure that the business rules are applied. The software generates all the necessary reports graphically on the screen and this helps to eliminate paperwork.

Flexibility of the system is the key in keeping up with the needs of the computer-integrated farm, as well as the customer's needs. TMS is fully user-configured, with powerful user reporting tools allowing access to valuable information. It can also be interfaced to third party software like SCADA systems for water quality monitoring.

In addition, a messaging system is integrated so that any problem requiring immediate attention can be automatically relayed via pagers or hand phones to the persons in charge.

TMS is a web-based application allowing all pertinent information to be viewed at any approved location with security features built-in. The farm CEO will have this information in his office to control and monitor all aspects of farm management effectively and efficiently.

TMS will incorporate the following modules:
1. The Overall Information Manager (OIM)
2. The Production Projection Module (PPM)
3. The Overall Costing Module (OCM)
4. The Order Capture System (OCS)
5. The Egg Inventory System (EIS)
6. Cold-room Inventory Management (CIM)
7. The Cart Tracking System (CTS)
8. The Emergency Analysis Tool (EAT)

### The Overall Information Manager (OIM)

OIM is a production data management system, specifically designed to improve the efficiency and profitability of operations by speeding up collection, analysis and interpretation of data. OIM records and manages all the data on a real-time and daily basis.

OIM also accurately gathers the information on the amount of feed, water, electricity, etc. used daily in order to keep track of these costs.

### The Production Projection Module (PPM)

This module can be added to the TMS for projecting the expected production flow. For example, in the case of layers, the expected flow can be projected for all flocks in production as well as projected flocks. Also, the placement dates may be predicted into the future and the egg flow from these flocks may be projected as well. Pullet requirements are calculated making sure that pullet orders are placed well in advance.

The production flow projections may be tied to predicted markets and projected revenues may be calculated. A number of reports are available as well as colour graphs that allow the use to view trends in the projections as well as markets. An advanced data query utility makes it easy to generate "what if" scenarios.

### The Overall Costing Module (OCM)

OCM is based on Activity Based Costing principles, which has the ability to "pool" costs from a general ledger, accounts payable and payroll, or accept cost postings directly. The costs are correctly allocated to the specified products by means of cost drivers. Costs such as depreciation, taxes, etc. are entered into an allocation table once and then distributed to where they belong automatically.

For example, in the case of layers, accurate feed and drinking water cost is calculated from the feed consumption calculations in OIM, which are done on a FIFO basis. Egg counters using optical sensors at each house will enable the total number of eggs to be known. Based on keyed information on latest market prices of eggs, this allows revenues to be calculated. Further, graded and packed eggs, as well as processed eggs are also counted and weighed separately. This information is captured to provide revenues from these different sources and provides a comparison between eggs collected at the farm, shall eggs and processed eggs.

Once the costing module is installed and integrated with both OIM and the financial package, costing can be done with practically no data entry.

### The Order Capture System (OCS)

The purpose of OCS is to capture customer orders and distribute them to the farms that would make up those orders. Central order taking is simplified with OCS maintaining records of where orders are sent and their status at all times.

Linked to the product inventory system or PIS, OCS can take orders on available inventory at various farm locations. A single order may be assigned to more than one farm for completion. Central order processing at the sales office can monitor status at all times. Customer profiles describe products normally purchased, which speeds up order taking.

Reporting on past order history is simplified. History of each order requirement and final make-up is kept, allowing detailed and summarized reporting per customer, product and farm for any given period.

Orders are managed by order date, delivery date and load date. This capability builds confidence in the customer that his order will be right.

### The Product Inventory Module (PIM)

PIM receives the orders released by the OCS and maintains a farm order board by load date and classification. The order board shows what must be produced on the specific load date to meet the orders. If future orders are entered into the OCS, the farm order board will show what must be produced for each day in the future.

The order items are acknowledged as received at the farm, which in turn notifies the sales department that the farm has accepted the specific items. A simple yet sophisticated inventory "check-in" after the grader is accomplished by means of touch screens or bar code readers. The "check-in" program shows a daily plan per product and what has been sent into the cold-rooms, silos or bag storage areas in real-time. Orders are dispatched by means of a hand-held barcode scanner.

### The Cold-Room Inventory System (CIS)

The OCS and PIM modules also form part of TMS. OCS is used to record customer orders and distribute them to the farms that would make up these orders.

Orders may be keyed manually or imported from other sources. A full import/export feature is available that allows the OCS to be integrated with third party software modules.

Enhanced marked based pricing features may be used to price orders. Linked to PIM, OCS can take orders based on available inventory at various farm locations. A history of order requirement and final make-up is kept, allowing detailed and summarized reporting per customer, product and farm for any given period. The OCS generates a daily run sheet for each farm describing exactly how much of each product has to be run for that day. This is sent to the respective farms by network or modem, together with all orders and inter-plant transfers.

All skids, racks, barrels, etc. of products moved in the cold-room are identified by a bar-coded "Skid-Tag" which uniquely identifies that item. All relevant production data such as the production date, expiration date and product quantity are recorded against this Tag. A load manifest is then generated for each load that is shipped. The manifest identifies the orders contained within that load, sorted by drop sequence. Products are scanned onto the truck by the use of a hand-held barcode-scanning device. This information in turn updates the on-hand inventory.

A pick list may be generated for each order identifying the oldest products on hand that will suit the orders requirements. This way bar-coding is sued to facilitate stock rotation and product aging.

The status of each order is continually broadcasted to the OCS, together with a real-time picture of each farm's inventory, allowing the sales department to maintain a live picture of the progress of orders from when they are released, accepted, placed into work in progress and finally completed.

### The Cart Tracking System (CTS)

Carts, racks or totes are tracked by means of checking them to and from customers, and as they are packed. The system keeps track of where they are and how long they have been at each stage. Early warning reports identify units that are overdue for return, or have been removed from circulation. A history of repairs and related costs are kept for the life cycle of the units. Management reports show the overall utilization of all resources as well as by individual customers. Efficient management of the resources back realizes quick payback.

### The Emergency Analysis Tool (EAT)

EAT includes the important principles in a database system that documents the model for the process as it proceeds through the suggested principles.

Once the model has been set up, EAT will generate the necessary schedule detailing where, when and how measurements need to be captured. EAT will keep these records securely in time sequence. Analysis features report and graph the results when required, including statistical functions, which forecast measurement trends, shown which measurements are in control, or going out of control.

EAT can be used through the entire process, from raw material receiving through further processing, for each product's value chain.

Field sampling programs collect samples by means of bar-code scanners, touch screens or hand-held computers. Data can be input in real-time, or in batch mode.

If any sample is out of the set limits, reasons are requested and the corrective action to be taken is displayed to the sampler immediately. Preshipment reports detail all samples taken for a specific period of time, showing samples taken and whether any corrective actions were taken, and the reason for out of limit conditions. If relevant, a number, which could be a batch/pallet/date code could be input with the sample.

EAT will allow historical samples to be referenced by these numbers to find what conditions were during the production of that lot. One of the requirements of course, is that the plan be kept secure. EAT will us a few levels of security for each functional part of the system to assure that only authorized persons can make changes.

In summary, once all the necessary structures have been defined and data capture is input, EAT maintains the production plan, of which part or whole of the plan can be printed on demand.

### CIF Feature List

The CIF feature list summarized as follows:
- Flock/Fish/Cattle Details
- History Data Maintained
- Flock/Fish/Cattle Depletion Details
- Standard to Actual Comparison
- Disease Profiles
- Vaccination History
- Egg Production, Grade-outs & Sampling
- Feed Usage & Utilization
- Drinking Water Usage & Utilization
- Job Scheduling
- Generic & Custom Reporting
- Enhanced Charting Capabilities
- Remote Site Management
- Ease of Data Capture
- User Configurable
- Costing
- Multi-Language Support
- Traceability
- Complete Record Keeping
- Standard Operating Procedures/Sanitation Standard Operation Procedures
- Scheduled or Event-based sampling
- Corrective Actions, Auditing, Preventive Measures
- SPC and Process Management
- Real-Time Sensor Integraton (direct to sensors, or to PLC control equipment)
- Real-Time Text Paging for overdue samples, or samples out of limits
- Real-time Messaging System
- Voice alarms
- Video Viewing

## Claims

1. Method for integrated farming, comprising:
housing poultry nearby a pond filled with water,
rearing fresh water fish in the pond filled with water,
conveying the droppings of the poultry in the water of the pond,
pumping the water from the pond to a sprinkler system, distributing the water pumped through the sprinkler system over a cultivated area of plants, collecting the water after having soaked through the soil of the plants and redirecting the collected water to the pond, and
providing treatment of the water of the pond such that the amount of oxygen and/or the amount of ammonia and/or the pH-value and/or the temperature is stabilized approximately on a predetermined value, wherein
- a required amount of oxygen will be pumped into the pond if the oxygen level is too low,
- water from the pond will be pumped out to the sprinkler system if the values of ammonia or pH are not in their predetermined range and
- fresh water will be pumped into the sprinkler system as much as necessary if the reading of the multi-probes and/or sensors in the sprinkler system for the parameters of oxygen, ammonia, pH-value and temperature are not within a predetermined range.

2. Method for integrated farming according to claim 1, wherein the poultry are layer hens which are housed on top of the pond.

3. Method for integrated farming according to one of the claims 1 - 2, wherein the pump capacity is controlled such that the sprinkler system provides a constant source of nutrients for the growth of the plants.

4. Method for integrated farming according to one of the claims 1 - 3, wherein the plants consist of grass and/or vegetables and/or herbs.

5. Method for integrated farming according to claim 4, wherein the water of the pond is first passed through a cultivated area of vegetables and/or herbs and then is passed through a cultivated area of grass.

6. Method for integrated farming according to claim 5, wherein the cultivated area of grass is used for livestock rearing.

7. Method for integrated farming according to one of the claims 1 - 6, wherein a cleaning pond is provided, which enables a water treatment.

8. Apparatus for integrated farming, comprising:
a housing for keeping poultry nearby a pond filled with water and fresh water fish for rearing in the pond,
means for conveying the droppings of the poultry in the water of the pond,
means for pumping the water from the pond to a sprinkler system, means for distributing the water pumped through the sprinkler system over a cultivated area of plants, means for collecting the water after having soaked through the soil of the plants and means for redirecting the collected water to the pond, and
means for providing treatment of the water of the pond such that the amount of oxygen and/or the amount of ammonia and/or the pH-value and/or the temperature is stabilized approximately on a predetermined value, wherein
- a required amount of oxygen will be pumped into the pond if the oxygen level is too low,
- water from the pond will be pumped out to the sprinkler system if the values of ammonia or pH are not in their predetermined range and
- fresh water will be pumped into the sprinkler system as much as necessary if the reading of the multi-probes and/or sensors in the sprinkler system for the parameters of oxygen, ammonia, pH-value and temperature are not within a predetermined range.

9. Apparatus for integrated farming according to claim 8, wherein the poultry are layer hens which are housed on top of the pond.

10. Apparatus for integrated farming according to one of the claims 8 - 9, wherein the pump capacity is controlled such that the sprinkler system provides a constant source of nutrients for the growth of the plants.

11. Apparatus for integrated farming according to one of the claims 8 - 10, wherein the plants consist of grass and/or vegetables and/or herbs.

12. Apparatus for integrated farming according to claim 11, wherein the water of the pond is first passed through a cultivated area of vegetables and/or herbs and then is passed through a cultivated area of grass.

13. Apparatus for integrated farming according to claim 12, wherein the cultivated area of grass is used for livestock rearing.

14. Apparatus for integrated farming according to one of the claims 8 - 13, wherein a cleaning pond is provided, which enables a water treatment.

## Patentansprüche

1. Verfahren zum Betreiben einer integrierten Landwirtschaft, umfassend:
Halten von Geflügeltieren nahe einem mit Wasser gefüllten Teich,
Züchten von Süßwasserfischen in dem mit Wasser gefüllten Teich,
Beförderung der Ausscheidungen der Geflügeltiere in das Wasser des Teichs,
Pumpen des Wassers des Teichs in ein Sprinklersystem, Verteilen des durch das Sprinklersystem gepumpten Wassers auf einer Pflanzenanbaufläche, Sammeln des Wassers nachdem es durch den Boden der Pflanzen gesickert ist und Zurückführung des gesammelten Wassers in den Teich, und
Aufbereitung des Wassers des Teichs derart, dass der Anteil von Sauerstoff und/oder der Anteil von Ammoniak und/oder der ph-Wert und/oder die Temperatur annähernd auf einen vorgegebenen Wert gebracht wird, wobei
- ein benötigter Anteil von Sauerstoff in den Teich gepumpt wird, wenn der Sauerstoffanteil zu gering ist,
- Wasser aus dem Teich in das Sprinklersystem gepumpt wird, wenn der Wert von Ammoniak oder der ph-Wert nicht in ihrem vorgegebenen Bereich liegen und
- soviel Frischwasser wie nötig in das Sprinklersystem gepumpt wird, wenn der abgelesene Messwert der Mehrfachmessfühler und/oder Sensoren in dem Sprinklersystem für die Messgrößen Sauerstoff, Ammoniak, ph-Wert und Temperatur nicht in einem vorgegeben Bereich liegt.

2. Verfahren zum Betreiben einer integrierten Landwirtschaft nach Anspruch 1, wobei die Geflügeltiere Legehennen sind, die über dem Teich gehalten werden.

3. Verfahren zum Betreiben einer integrierten Landwirtschaft nach einem der Ansprüche 1 - 2, wobei die Pumpenkapazität derart geregelt ist, dass das Sprinklersystem eine konstante Quelle von Nährstoffen für das Wachstum der Pflanzen zur Verfügung stellt.

4. Verfahren zum Betreiben einer integrierten Landwirtschaft nach einem der Ansprüche 1 - 3, wobei die Pflanzen Gras und/oder Gemüse und/oder Gewürze umfassen.

5. Verfahren zum Betreiben einer integrierten Landwirtschaft nach Anspruch 4, wobei das Wasser des Teichs zuerst durch eine Anbaufläche von Gemüse und/oder Gewürzen und dann durch eine Anbaufläche von Gras geleitet wird.

6. Verfahren zum Betreiben einer integrierten Landwirtschaft nach Anspruch 5, wobei die Anbaufläche von Gras für die Aufzucht von Nutztieren bestimmt ist.

7. Verfahren zum Betreiben einer integrierten Landwirtschaft nach einem der Ansprüche 1 - 6, wobei ein Reinigungsbecken bereitgestellt ist, das eine Wasseraufbereitung ermöglicht.

8. Vorrichtung zum Betreiben einer integrierten Landwirtschaft, umfassend:
eine Behausung zum Halten von Geflügeltieren nahe einem Teich, der mit Wasser und zur Aufzucht in dem Teich bestimmten Süßwasserfischen gefüllt ist,
Mittel zur Beförderung der Ausscheidungen der Geflügeltiere in das Wasser des Teichs,
Mittel zum Pumpen des Wassers des Teichs in ein Sprinklersystem, Mittel zum Verteilen des durch das Sprinklersystem gepumpten Wassers auf einer Pflanzenanbaufläche, Mittel zum Sammeln des Wassers nachdem es durch den Boden der Pflanzen gesickert ist und Mittel zur Zurückführung des gesammelten Wassers in den Teich, und
Mittel zur Aufbereitung des Wassers des Teichs derart, dass der Anteil von Sauerstoff und/oder der Anteil von Ammoniak und/oder der ph-Wert und/oder die Temperatur annähernd auf einen vorgegebenen Wert gebracht wird, wobei
- ein benötigter Anteil von Sauerstoff in den Teich gepumpt wird, wenn der Sauerstoffanteil zu gering ist,
- Wasser aus dem Teich in das Sprinklersystem gepumpt wird, wenn der Wert von Ammoniak oder der ph-Wert nicht in ihrem vorgegebenen Bereich liegen und
- soviel Frischwasser wie nötig in das Sprinklersystem gepumpt wird, wenn der abgelesene Messwert der Mehrfachmessfühler und/oder Sensoren in dem Sprinklersystem für die Messgrößen Sauerstoff, Ammoniak, ph-Wert und Temperatur nicht in einem vorgegeben Bereich liegt.

9. Vorrichtung zum Betreiben einer integrierten Landwirtschaft nach Anspruch 8, wobei die Geflügeltiere Legehennen sind, die über dem Teich gehalten werden.

10. Vorrichtung zum Betreiben einer integrierten Landwirtschaft nach einem der Ansprüche 8 - 9, wobei die Pumpenkapazität derart geregelt ist, dass das Sprinklersystem eine konstante Quelle von Nährstoffen für das Wachstum der Pflanzen zur Verfügung stellt.

11. Vorrichtung zum Betreiben einer integrierten Landwirtschaft nach einem der Ansprüche 8 - 10, wobei die Pflanzen Gras und/oder Gemüse und/oder Gewürze umfassen.

12. Vorrichtung zum Betreiben einer integrierten Landwirtschaft nach Anspruch 11, wobei das Wasser des Teichs zuerst durch eine Anbaufläche von Gemüse und/oder Gewürzen und dann durch eine Anbaufläche von Gras geleitet wird.

13. Vorrichtung zum Betreiben einer integrierten Landwirtschaft nach Anspruch 12, wobei die Anbaufläche von Gras für die Aufzucht von Nutztieren bestimmt ist.

14. Vorrichtung zum Betreiben einer integrierten Landwirtschaft nach einem der Ansprüche 8 - 13, wobei ein Reinigungsbecken bereitgestellt ist, das eine Wasseraufbereitung ermöglicht.

## Revendications

1. Procédé d'agriculture intégrée, comprenant :
l'abri de volailles près d'un étang rempli d'eau,
l'élevage de poissons dulcicoles dans l'étang rempli d'eau ;
le transport des fientes des volailles dans l'eau de l'étang,
le pompage de l'eau de l'étang vers un système d'asperseurs, distribuant l'eau pompée à travers le système d'asperseurs sur une zone cultivée de végétaux, la collecte de l'eau après qu'elle ait imbibé le sol des végétaux et le renvoi de l'eau collectée vers l'étang, et
la fourniture d'un traitement de l'eau de l'étang de sorte que la quantité d'oxygène et/ou la quantité d'ammoniac et/ou la valeur du pH et/ou la température soient stabilisées approximativement sur une valeur prédéterminée, dans laquelle
- une quantité requise d'oxygène sera pompée à l'intérieur de l'étang si la teneur en oxygène est trop basse,
- l'eau de l'étang sera soutirée par pompage vers le système d'asperseurs si les valeurs concernant l'ammoniac ou le pH ne se situent pas dans leur plage prédéterminée et
- l'eau douce sera pompée à l'intérieur du système d'asperseurs tant que nécessaire si la lecture des multi-sondes et/ou des capteurs dans le système d'asperseurs pour les paramètres concernant l'oxygène, l'ammoniac, la valeur du pH et la température ne se situent pas à l'intérieur d'une plage prédéterminée.

2. Procédé d'agriculture intégrée selon la revendication 1, dans lequel les volailles sont des poules pondeuses qui sont abritées au-dessus de l'étang.

3. Procédé d'agriculture intégrée selon l'une quelconque des revendications 1 à 2, dans lequel la capacité de pompage est régulée de sorte que le système d'asperseurs fournisse une source constante de nutriments pour la croissance des végétaux.

4. Procédé d'agriculture intégrée selon l'une quelconque des revendications 1 à 3, dans lequel les végétaux consistent en graminées et/ou légumes et/ou herbes.

5. Procédé d'agriculture intégrée selon la revendication 4, dans lequel l'eau de l'étang est tout d'abord passée à travers une zone cultivée de plantes potagères et/ou d'herbes et est ensuite passée à travers une zone cultivée de graminées.

6. Procédé d'agriculture intégrée selon la revendication 5, dans lequel la zone cultivée en graminées est utilisée pour l'élevage de bétail.

7. Procédé d'agriculture intégrée selon l'une quelconque des revendications 1 à 6, dans lequel un étang d'épuration est proposé, qui permet un traitement de l'eau.

8. Dispositif d'agriculture intégrée, comprenant :
un abri pour loger les volailles près d'un étang rempli d'eau et de poissons dulcicoles pour la pisciculture dans l'étang ;
des moyens de transport des fientes des volailles dans l'eau de l'étang,
des moyens de pompage de l'eau de l'étang vers un système d'asperseurs, des moyens de distribution de l'eau pompée à travers le système d'asperseurs sur une zone cultivée de végétaux, des moyens de collecte de l'eau après qu'elle ait imbibé le sol des végétaux et des moyens de renvoi de l'eau collectée vers l'étang,
des moyens de proposition d'un traitement de l'eau de l'étang de sorte que la quantité d'oxygène et/ou la quantité d'ammoniac et/ou la valeur du pH et/ou la température se stabilisent approximativement sur une valeur prédéterminée, dans lesquels
- une quantité requise d'oxygène sera pompée à l'intérieur de l'étang si la teneur en oxygène est trop basse,
- l'eau de l'étang sera extraite par pompage vers le système d'asperseurs si les valeurs relatives à l'ammoniac ou au pH ne se situent pas dans leur plage prédéterminée et
- l'eau douce sera pompée à l'intérieur du système d'asperseurs tant que nécessaire si la lecture des multi-sondes et/ou capteurs dans le système d'asperseurs pour les paramètres concernant l'oxygène, l'ammoniac, la valeur du pH et la température ne se situent pas à l'intérieur d'une plage prédéterminée.

9. Dispositif d'agriculture intégrée selon la revendication 8, dans lequel la volaille est représentée par des poules pondeuses qui sont abritées au-dessus de l'étang.

10. Dispositif d'agriculture intégrée selon l'une quelconque des revendications 8 à 9, dans lequel la capacité de pompage est régulée afin que le système d'asperseurs propose une source constante de nutriments pour la croissance des végétaux.

11. Dispositif pour l'agriculture intégrée selon l'une quelconque des revendications 8 à 10, dans lequel les végétaux consistent en graminées et/ou plantes potagères et/ou herbes.

12. Dispositif d'agriculture intégrée selon la revendication 11, dans lequel l'eau de l'étang est tout d'abord passée à travers une zone cultivée de plantes potagères et/ou d'herbes puis est passée à travers une zone cultivée de graminées.

13. Dispositif d'agriculture intégrée selon la revendication 12, dans lequel la zone cultivée de graminées est utilisée pour l'élevage de bétail.

14. Dispositif d'agriculture intégrée selon l'une quelconque des revendications 8 à 13, dans lequel un étang d'épuration est proposé, qui permet un traitement de l'eau.
